# EUROPÄISCHE PATENTSCHRIFT

(11) **EP 3 883 665 B1**
(45) Veröffentlichungstag und Bekanntmachung des Hinweises auf die Patenterteilung: **17.07.2024**
(21) Anmeldenummer: 19712934.9
(22) Anmeldetag: 15.03.2019
(51) Int. Cl.: B01D 29/54, B01D 29/56, B01D 35/147

(54) **FILTERELEMENT**
FILTER ELEMENT
ÉLÉMENT FILTRANT

(43) Veröffentlichungstag der Anmeldung: 29.09.2021
(73) Patentinhaber: Hydac Filtertechnik GmbH, 66280 Sulzbach/Saar (DE)
(72) Erfinder: SCHMIDT, Armin, 66557 Illingen (DE); KOCH, Edwin, 66636 Tholey (DE); WEITER, Laura, 66113 Saarbrücken (DE)
(74) Vertreter: Bartels und Partner, Patentanwälte
(86) Internationale Anmeldenummer: PCT/EP2019/056592
(87) Internationale Veröffentlichungsnummer: WO 2020/187390

(56) Entgegenhaltungen:
- EP-A1- 0 257 794
- WO-A1-2019/057505
- DE-A1- 102016 005 762
- DE-B4- 102004 061 078

## Beschreibung

Die Erfindung betrifft ein Filterelement, insbesondere für Anwendungen bei der Getriebeölschmierung für Windkraftanlagen mit den Merkmalen im Oberbegriff von Anspruch 1.

Filterelemente dieser Art sind Stand der Technik. Beispielsweise zeigt die DE 10 2004 061 078 B4 für ein solches Filterelement ein Filtermedium mit Strukturlagen unterschiedlicher Flächenausdehnung und mit unterschiedlichen Filtereigenschaften, wobei eine Strukturlage in der Art eines Hauptfilters und eine weitere Strukturlage in der Art eines Vorfilters ausgebildet sind. Da sich mit Filterelementen, deren Filtermedium bereichsweise unterschiedliche Filtereigenschaften aufweist, mehrere Filtrationsaufgaben mit einem einzigen Filterelement erfüllen lassen, kommen solche Filterelemente mit Vorteil bei Anlagen zum Einsatz, bei denen ein beschränkter Einbauraum zur Verfügung steht.

Die EP 0 257 794 A1 beschreibt ein Filterelement, insbesondere für Anwendungen bei der Getriebeölschmierung für Windkraftanlagen, dessen Filtermedium in Form eines Hohlzylinders und ein an dessen Innenseite anliegendes fluiddurchlässiges Stützrohr, das einen inneren Filterhohlraum umgibt, wobei das Filtermedium in Durchströmungsrichtung eines Fluids gesehen eine Unfiltratseite von einer Filtratseite trennt und mindestens eine Strukturlage mit einer vorgegebenen Flächenausdehnung und mit vorgebbaren Filtereigenschaften sowie mindestens eine weitere Strukturlage mit vorgebbaren Filtereigenschaften aufweist, wobei die Flächenausdehnung der jeweils weiteren Strukturlage verschieden ist von der Flächenausdehnung der jeweils ersten Strukturlage, wobei die einzelnen Strukturlagen in Übereinanderlage den inneren Filterhohlraum umfassen, wobei die jeweils eine Strukturlage eine geringere Filterfeinheit als die in Durchströmungsrichtung gesehen jeweils vorangehende weitere Strukturlage aufweist und sich zwischen zwei Endkappen durchgehend erstreckt, und wobei die jeweils weitere Strukturlage, ausgehend von einer Mitte der jeweils einen Strukturlage, sich mit ihren beiden freien Enden unter Beibehalten eines axialen Abstandes in Richtung auf die jeweils zuordenbare Endkappe auf der jeweils einen Strukturlage erstreckt.

Weitere Filterelemente gehen aus der DE 10 2016 005 762 A1 und der WO 2019/057505 A1 hervor.

Ausgehend von diesem Stand der Technik stellt sich die Erfindung die Aufgabe, ein Filterelement der eingangs genannten Gattung zur Verfügung zu stellen, das sich besonders für den Einsatz bei Windkraftanwendungen eignet.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass sich die jeweils weitere Strukturlage, ausgehend von einer Mitte der jeweils einen Strukturlage, mit ihren beiden freien Enden unter Beibehalten eines axialen Abstandes in Richtung auf die jeweils zuordenbare Endkappe erstreckt; dass der Lagenaufbau des Filtermediums im Bereich der weiteren Strukturlage, in Durchströmungsrichtung gesehen, wie folgt ist:
- Drahtgewebe,
- Schutzvlies,
- Glasfasergelege als zusätzlicher Vor- und/oder Hauptfilter,
- Vorfilter,
- Hauptfilter,
- Schutzvlies,
- Drahtgewebe; und dass außerhalb dieser weiteren Strukturlage das Filterelement unter Einsatz desselben Lagenaufbaus kein
- Glasfasergelege als zusätzlichen Vor- und/oder Hauptfilter aufweist. In vorteilhafter Weise ist dadurch das Gesamt-Filtermedium in der Art eines Mesh-Pack ausgebildet.

Ferner ist vorgesehen, dass die jeweils eine Strukturlage eine geringere Filterfeinheit als die in Strömungsrichtung gesehen jeweils vorangehende weitere Strukturlage aufweist und sich zwischen zwei Endkappen durchgehend erstreckt und dass die jeweils weitere Strukturlage, ausgehend von einer Mitte der jeweils einen Strukturlage, sich mit ihren beiden freien Enden unter Beibehalten eines axialen Abstandes in Richtung auf die jeweils zuordenbare Endkappe auf der jeweils einen Strukturlage erstreckt.

Dadurch, dass Strukturlagen, die unterschiedliche Filtereigenschaften aufweisen, zu einem Filtermedium zusammengefasst sind, das sich zwischen Endkappen erstreckt, lässt sich das Filterelement in einer kompakten Bauweise realisieren, die geringen Einbauraum benötigt und dadurch für Windkraftanwendungen, insbesondere für den Einbau in die Gondel einer betreffenden Windkraftanlage, in besonderem Maße geeignet ist. Da weiter erfindungsgemäß die jeweiligen Strukturlagen eine unterschiedliche Flächenausdehnung besitzen, so dass Strukturlagen unterschiedlicher Filtereigenschaft jeweils von einem Teilstrom des Unfiltrats durchströmt sind, ist eine einfache Parallelschaltung der unterschiedlich gefilterten Teilströme erreicht.

Dadurch, dass neben dem mittigen Längenbereich, in dem sich die jeweils weitere Strukturlage befindet, je ein anströmbarer Flächenbereich der Strukturlage geringerer Filterfeinheit zur Verfügung steht, ist auch bei über die Baulänge unterschiedlich starker Anströmung der Außenseite mit Unfiltrat die Filterleistung der einen Strukturlage gut nutzbar, auch wenn im Betrieb die Anströmung im Bereich einer Endkappe stärker oder geringer ist als im Bereich der anderen Endkappe.

Mit Vorteil kann die jeweils weitere Strukturlage im Wesentlichen die Hälfte, vorzugsweise genau die Hälfte, der Baulänge der jeweils einen Strukturlage, aufweisen. Dadurch ist ein günstiges Verhältnis der Aufteilung der Teilströme in der Parallelschaltung erreichbar.

Bei besonders vorteilhaften Ausführungsbeispielen sind die einzelnen Strukturlagen mit der gleichen Art und der gleichen Anzahl von Filterfalten versehen. Das Gesamt-Filtermedium ist dadurch als einheitlicher, plissierter Hohlkörper mit eingefalteten Strukturlagen realisierbar.

Die jeweils weitere Strukturlage kann als Feinstfilterstufe ausgebildet einen Teilvolumenstrom stärker abreinigen, während gleichzeitig die eine Strukturlage als Feinfilterstufe den Gesamt-Druckverlust bei der Filtration niedrig hält und die Standzeit des Filterelements erhöht. In vorteilhafter Weise ist dadurch in Bereichen eine Feinstfiltration ohne damit einhergehende Erhöhung des Systemdrucks realisiert.

Mit Vorteil kann die jeweils eine Strukturlage eine Filterfeinheit von 10 *µ*m besitzen und die jeweils weitere Strukturlage eine Filterfeinheit von 5 *µ*m aufweisen. Die genannten Feinheiten können auch Zirka-Werte sein.

Ferner kann die Anordnung so getroffen sein, dass die Aufteilung von Teilzu Gesamtvolumenstrom vorzugsweise 1/3 zu 2/3 beträgt und bis zu einem Verhältnis von 50 : 50 % reicht. Bei kleinerem Anteil des feinstgefilterten Teilvolumenstroms ergibt sich ein vorteilhaft geringer Gesamt-Druckverlust bei der Filtration.

Mit Vorteil kann die eine Strukturlage als Nebenfilter dienen, und die weitere Strukturlage kann einen Hauptfilter derart ausbilden, dass eine Art Haupt- und Nebenstromfiltration erreicht ist. Dadurch lässt sich mittels eines einzigen Filterelements die Getriebeölfiltration bei Windkraftanlagen durchführen.

Die eine Endkappe kann ein Bypassventil aufweisen und/oder die andere Endkappe kann einen in den Filterhohlraum hinein ragenden Schutzfilter aufweisen. Dank des Vorhandenseins des Bypassventils ist eine hohe Betriebssicherheit des zugeordneten Systems, wie der Windkraftanlage, gewährleistet, während gleichzeitig das Vorhandensein des Schutzfilters verhindert, dass bei einem Ansprechen des Bypassventils ungefiltertes Fluid zum jeweiligen Verbraucher gelangt.

Nachstehend ist die Erfindung anhand eines in der Zeichnung dargestellten Ausführungsbeispiels im Einzelnen erläutert. Es zeigen:
- Fig. 1: eine in einem Endbereich längs aufgeschnitten gezeichnete Sei-tenansicht eines Ausführungsbeispiels des erfindungsgemäßen Filterelements; und
- Fig. 2: in Symboldarstellung die Schaltung der im Betrieb durchström-baren Fluidwege eines nicht-erfindungsgemäßen Filterelements.

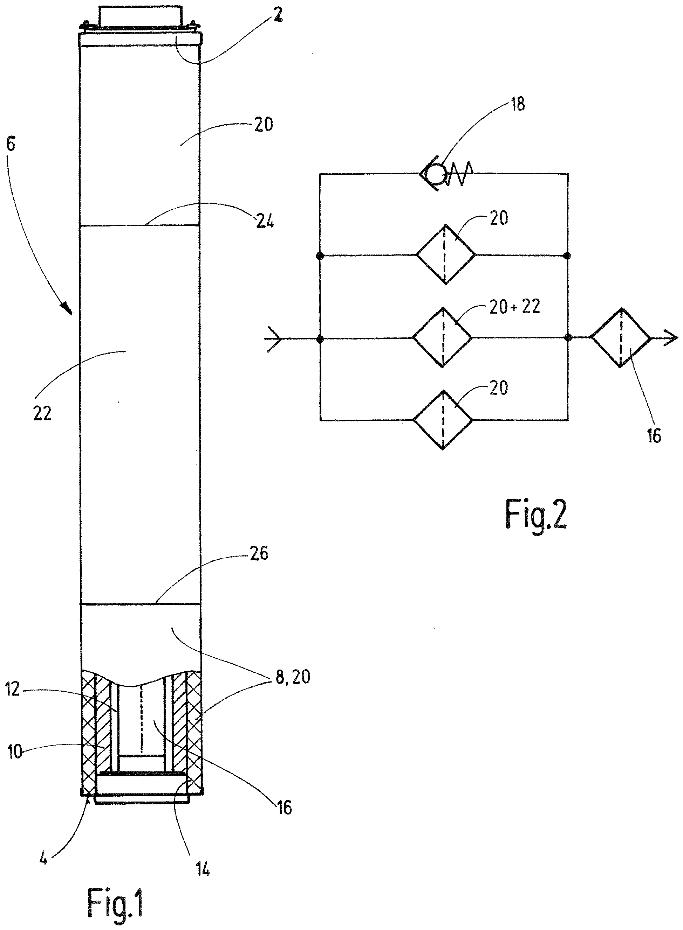

Die Ausführungsform der Fig. 2 dient lediglich der Erläuterung des Hintergrundes der Erfindung und ist nicht Gegenstand eines Anspruches.

Das dargestellte und beschriebene Ausführungsbeispiel in Form einer Filterpatrone weist zwischen Endkappen 2 und 4 einen einheitlichen Baukörper 6 in der Art eines langgestreckten Kreiszylinders auf. Wie bei Filterpatronen üblich, erstrecken sich zwischen den Endkappen 2 und 4, und von diesen eingefasst, ein Filtermedium 8 in Form eines Hohlzylinders und ein an dessen Innenseite anliegendes fluiddurchlässiges Stützrohr 10, das einen inneren Filterhohlraum 12 umgibt. Die Endkappen 2 und 4 weisen jeweils eine zentrale Durchgangsöffnung 14 (nur an der Endkappe 4 sichtbar und beziffert) auf. Beim Betrieb, bei dem das Filtermedium 8 von außen angeströmt ist, bildet der Filterhohlraum 12 die Filtratseite, aus der das Filtrat durch die Durchgangsöffnung 14 der Endkappe 4 über ein Schutzfilter 16 austritt. Bei diesem handelt es sich beim Ausführungsbeispiel um ein Grobfilter in der Art eines Filtersiebes mit einer Filterfeinheit von 50 *µ*m. Die Durchgangsöffnung der in Fig. 1 oberen Endkappe 2 ist normalerweise durch ein in die Endkappe 2 eingebautes Bypassventil (in Fig. 2 mit 18 bezeichnet) geschlossen. Das dem Stand der Technik entsprechend ausgebildete Bypassventil 18 gibt die Durchgangsöffnung der Endkappe 2 bei Übersteigen eines vorgegebenen Differenzdrucks zwischen der äußeren Anströmseite und dem inneren Filterhohlraum 12 frei, so dass bis dahin abgereinigtes Fluid unter Umgehung des Filtermediums 8 in den inneren Filterhohlraum 12 gelangen kann.

Das Filtermedium 8 in Form eines mehrlagigen plissierten Mesh-Pack weist eine erste Strukturlage 20 auf, die sich vollflächig zwischen oberer Endkappe 2 und unterer Endkappe 4 erstreckt. Im mittleren Längenbereich zwischen den Endkappen 2 und 4 befindet sich an der Außenseite der Strukturlage 20 eine weitere Strukturlage 22, die sich lediglich über einen Teilbereich der Baulänge erstreckt und deren Enden 24 und 26 von der benachbarten Endkappe 2 bzw. 4 jeweils einen axialen Abstand aufweisen. Beim gezeigten Ausführungsbeispiel beträgt die axiale Länge der zweiten Strukturlage 22 die Hälfte der gesamten Baulänge des Filtermediums 8 und die Enden 24 und 26 haben jeweils den gleichen axialen Abstand von der benachbarten Endkappe 2 bzw. 4. Die Filterfeinheit der ersten Strukturlage 20 beträgt 10 *µ*m, und die Filterfeinheit der zweiten Strukturlage 22 beträgt 5 *µ*m.

Der Aufbau im Bereich der ersten Strukturlage 20 des plissierten Mesh-Pack mit einheitlichen Filterfalten ist, in Strömungsrichtung gesehen von außen nach innen, wie folgt:
- Drahtgewebe,
- Schutzvlies,
- Vorfilter,
- Hauptfilter,
- Schutzvlies und
- Drahtgewebe.

Im Bereich der zweiten Strukturlage 22 weist das Filterelement den gleichen Aufbau auf wobei jedoch zwischen dem Schutzvlies und dem Vorfilter ein zusätzliches Glasfasergelege als zusätzlicher Vor- oder Hauptfilter eingefaltet ist. Dadurch ergibt sich für den Bereich der zweiten Strukturlage 22 eine Filterfeinheit von 5 *µ*m, während die Filterfeinheit in den freiliegenden Längenbereichen der ersten Strukturlage 20 10 *µ*m beträgt. Anstelle von einheitlichen Filterfalten mit gleicher Faltenhöhe können die Filterfalten in alternierender Abfolge einmal eine größere Faltenhöhe und nachfolgend eine kleinere Faltenhöhe aufweisen.

Wie in Fig. 2 verdeutlicht, ergibt sich bei dieser Anordnung der Strukturlagen 20, 22 im Betrieb eine Parallelschaltung dreier, in einem Gesamt-Filtermedium 8 vereinigter Filterkomponenten mit unterschiedlicher Filterwirkung, wobei der Volumenstrom des Unfiltrats in Teilvolumenströme geteilt ist. Bei Filterfeinheiten der Strukturlage 22 von 5 *µ*m und der ersten Strukturlage 20 von 10 *µ*m, wobei sich die mittige Strukturlage 22 über die Hälfte der Gesamt-Baulänge erstreckt und sich die Enden 22 und 24 dieser Strukturlage 22 in gleichen Abständen von der benachbarten Endkappe 2 bzw. 4 befinden, ergibt sich eine Aufteilung der Teilvolumenströme, die etwa 1/3 zu 2/3 beträgt. Im Betrieb reinigt die Strukturlage 22 als eine Feinstfilterstufe ihren Teilvolumenstrom stärker ab, während gleichzeitig die freigelassene Strukturlage 20 als Feinfilterstufe wirksam ist. Trotz der durch die Strukturlage 22 bewirkten Feinstfilterung verbleibt der Gesamt-Druckverlust bei der Filtration durch die geringe Filterfeinheit der freigelassenen Bereiche der Strukturlage 20 niedrig. Mit nur einem Filterelement ist dadurch eine Haupt- und Nebenstromfiltration realisierbar, bei der die Strukturlage 20 mit ihren freigelassenen Flächenbereichen als Nebenfilter und die feinere Strukturlage 22 als Hauptfilter dient.

Dadurch, dass der Parallelschaltung, wie in der Fig. 2 gezeigt, ein Schutzfilter 16 nachgeschaltet ist, ist sichergestellt, dass auch bei geöffnetem Bypassventil 18 kein ungefiltertes Fluid zum Verbraucher gelangt. Das erfindungsgemäße Filterelement gewährleistet eine erhöhte Betriebssicherheit, weil ausgeschlossen ist, dass auch bei geöffnetem Bypassventil Grobpartikel zum Verbraucher gelangen könnten und weil gleichzeitig durch das Vorhandensein der Feinstfilterstufe auch Feinverschmutzungen abgereinigt werden und somit noch bessere Ölreinheiten erreicht werden, ohne den Druckverlust einer reinen 5 *µ*m-Stufe in Kauf nehmen zu müssen.

## Patentansprüche

1. Filterelement, insbesondere für Anwendungen bei der Getriebeölschmierung für Windkraftanlagen, dessen Filtermedium (8) in Form eines Hohlzylinders und ein an dessen Innenseite anliegendes fluiddurchlässiges Stützrohr (10), das einen inneren Filterhohlraum (12) umgibt, wobei das Filtermedium (8) in Durchströmungsrichtung eines Fluids gesehen eine Unfiltratseite von einer Filtratseite trennt und mindestens eine Strukturlage (20) mit einer vorgegebenen Flächenausdehnung und mit vorgebbaren Filtereigenschaften sowie mindestens eine weitere Strukturlage (22) mit vorgebbaren Filtereigenschaften aufweist, wobei die Flächenausdehnung der jeweils weiteren Strukturlage (22) verschieden ist von der Flächenausdehnung der jeweils ersten Strukturlage (20), wobei die einzelnen Strukturlagen (20, 22) in Übereinanderlage den inneren Filterhohlraum (12) umfassen, und wobei die jeweils eine Strukturlage (20) eine geringere Filterfeinheit als die in Durchströmungsrichtung gesehen jeweils vorangehende weitere Strukturlage (22) aufweist und sich zwischen zwei Endkappen (2, 4) durchgehend erstreckt,
**dadurch gekennzeichnet,**
**dass** sich die jeweils weitere Strukturlage (22), ausgehend von einer Mitte der jeweils einen Strukturlage (20), mit ihren beiden freien Enden (2, 4) unter Beibehalten eines axialen Abstandes in Richtung auf die jeweils zuordenbare Endkappe (2, 4) erstreckt;
**dass** der Lagenaufbau des Filtermediums (8) im Bereich der weiteren Strukturlage (22), in Durchströmungsrichtung gesehen, wie folgt ist:
- Drahtgewebe,
- Schutzvlies,
- Glasfasergelege als zusätzlicher Vor- und/oder Hauptfilter,
- Vorfilter,
- Hauptfilter,
- Schutzvlies,
- Drahtgewebe; und
**dass** außerhalb dieser weiteren Strukturlage (22) das Filterelement unter Einsatz desselben Lagenaufbaus kein
- Glasfasergelege als zusätzlichen Vor- und/oder Hauptfilter aufweist.

2. Filterelement nach Anspruch 1 **dadurch gekennzeichnet, dass** die jeweils weitere Strukturlage (22) im Wesentlichen die Hälfte, vorzugsweise genau die Hälfte, der Baulänge der jeweils einen Strukturlage (20) aufweist.

3. Filterelement nach einem der vorstehenden Ansprüche, **dadurch gekennzeichnet, dass** die einzelnen Strukturlagen (20, 22) mit der gleichen Art und der gleichen Anzahl von Filterfalten versehen sind.

4. Filterelement nach einem der vorstehenden Ansprüche, **dadurch gekennzeichnet, dass** die jeweils weitere Strukturlage (22) als Feinstfilterstufe ausgebildet einen Teilvolumenstrom stärker abreinigt, während gleichzeitig die eine Strukturlage (20) als Feinfilterstufe den Gesamt-Druckverlust bei der Filtration niedrig hält und die Standzeit des Filterelementes erhöht.

5. Filterelement nach einem der vorstehenden Ansprüche, **dadurch gekennzeichnet, dass** die jeweils eine Strukturlage (20) eine Filterfeinheit von 10 *µ*m besitzt und die jeweils weitere Strukturlage (22) eine Filterfeinheit von 5 *µ*m aufweist.

6. Filterelement nach einem der vorstehenden Ansprüche, **dadurch gekennzeichnet, dass** die Aufteilung von Teil- zu Gesamtvolumenstrom vorzugsweise 1/3 zu 2/3 beträgt und bis zu einem Verhältnis von 50 : 50 % reicht.

7. Filterelement nach einem der vorstehenden Ansprüche, **dadurch gekennzeichnet, dass** die eine Strukturlage (20) als Nebenfilter dient und die weitere Strukturlage (22) einen Hauptfilter derart ausbildet, dass eine Art Haupt- und Nebenstromfiltration erreicht ist.

8. Filterelement nach einem der vorstehenden Ansprüche, **dadurch gekennzeichnet, dass** die eine Endkappe (2) ein Bypassventil (18) aufweist und/oder die andere Endkappe (4) einen in den Filterhohlraum (12) hinein ragenden Schutzfilter (16) aufweist.

## Claims

1. Filter element, particularly for applications in transmission oil lubrication for wind turbines, the filter medium (8) of which is in the form of a hollow cylinder, and a fluid-permeable support tube (10) lying on the inside thereof, which surrounds an inner filter cavity (12), wherein the filter medium (8), viewed in the throughflow direction of a fluid, separates an unfiltered medium side from a filtrate side and comprises at least one structural layer (20) with a predefined surface area and with predefinable filter properties and at least one further structural layer (22) with predefinable filter properties, wherein the surface area of the respective further structural layer (22) is different from the surface area of the respective first structural layer (20), wherein the individual surface layers (20, 22), lying on top of the other, surround the inner filter cavity (12), and wherein one respective structural layer (20) has a lower filter grade than the respective preceding further structural layer (22), viewed in the throughflow direction, and extends continuously between two end caps (2, 4),
**characterised in that**
the respective further structural layer (22), starting from a mid-point of the respective one structural layer (20), extends with its two free ends (2, 4), retaining an axial distance, in the direction of the respective assignable end cap (2, 4),
**in that** the layer structure of the filter medium (8) in the region of the further structural layer (22), viewed in the throughflow direction, is as follows:
- wire mesh,
- protective fleece,
- glass fibre cloth as an additional pre- and/or main filter,
- prefilter,
- main filter,
- protective fleece,
- wire mesh, and
**in that**, outside this further structural layer (22), the filter element using the same layer structure does not have any
- glass fibre cloth as an additional pre- and/or main filter.

2. Filter element according to claim 1, **characterised in that** the respective further structural layer (22) is substantially half, preferably exactly half, the structural length of the respective one structural layer (20).

3. Filter element according to any of the preceding claims, **characterised in that** the individual structural layers (20, 22) are furnished with the same type and the same number of filter pleats.

4. Filter element according to any of the preceding claims, **characterised in that** the respective further structural layer (22) is configured as the finest filter stage and cleans a partial volume flow more effectively, while, at the same time, the one structural layer (20) as a fine filter stage keeps the overall pressure loss during filtration low and increases the service life of the filter element.

5. Filter element according to any of the preceding claims, **characterised in that** the respective one structural layer (20) has a filter grade of 10 µm and the respective further structural layer (22) has a filter grade of 5 µm.

6. Filter element according to any of the preceding claims, **characterised in that** the distribution of the partial volume flow to the overall volume flow is preferably 1/3 to 2/3 and goes up to a ratio of 50:50%.

7. Filter element according to any of the preceding claims, **characterised in that** the one structural layer (20) acts as a secondary filter and the further structural layer (22) forms a main filter such that a kind of main and secondary flow filtration is achieved.

8. Filter element according to any of the preceding claims, **characterised in that** one end cap (2) comprises a bypass valve (18) and/or the other end cap (4) comprises a protective filter (16) protruding into the filter cavity (12).

## Revendications

1. Elément de filtre, en particulier pour des applications dans la lubrification d'huile d'engrenage pour des éoliennes, dont le milieu (8) filtrant a la forme d'un cylindre creux et a un tube (10) d'appui perméable au fluide, qui s'applique à sa face intérieure et qui entoure une cavité (12) intérieure de filtre, dans lequel le milieu (8) filtrant sépare, considéré dans le sens de passage d'un fluide, un côté de non filtrat d'un côté de filtrat et a au moins une couche (20) de structure ayant une étendue en surface donnée à l'avance et ayant des propriétés de filtre pouvant être données à l'avance ainsi qu'une autre couche (22) de structure ayant des propriétés de filtre pouvant être données à l'avance, dans lequel l'étendue en surface de l'autre couche (22) de structure est différente de l'étendue en surface de respectivement la première couche (20) de structure, dans lequel les diverses couches (20, 22) de structure entourent, en une position superposée, la cavité (12) intérieure de filtre, et
dans lequel la respectivement une couche (20) de structure a une finesse de filtre plus petite que l'autre couche (22) de structure précédente respectivement, considéré dans le sens de passage, et s'étend d'une manière continue entre deux coiffes (2, 4) d'extrémité,
**caractérisé**
**en ce que** la respectivement autre couche (22) de structure s'étend, à partir d'un milieu de respectivement une couche (20) de structure, par ses deux extrémités (2, 4) libres en conservant une distance axiale en direction de la coiffe (2, 4) d'extrémité pouvant être associée respectivement ;
**en ce que** la structure de couches du milieu (8) filtrant dans la partie de l'autre couche (22) de structure, considéré dans le sens de passage, est la suivante :
- toile métallique,
- non tissé de protection,
- nappe de fibres de verre comme préfiltre et/ou filtre principal supplémentaire,
- préfiltre,
- filtre principal,
- non tissé de protection,
- toile métallique ; et
**en ce qu'**à l'extérieur de cette autre couche (22) de structure, l'élément de filtre n'a pas, en utilisant la même constitution de couche,
- de nappe de fibres de verre comme préfiltre et/ou filtre principal supplémentaire.

2. Elément de filtre suivant la revendication 1, **caractérisé en ce que** l'autre couche (22) respective de structure représente sensiblement la moitié, de préférence exactement la moitié, de la longueur de la respectivement une couche (20) de structure.

3. Elément de filtre suivant l'une des revendications précédentes, **caractérisé en ce que** les diverses couches (20, 22) de structure sont pourvues du même type et du même nombre de plis de filtre.

4. Elément de filtre suivant l'une des revendications précédentes, **caractérisé en ce que** l'autre couche (22) respective de structure, constituée sous la forme d'un étage de filtre très fin, épure plus fortement un courant partiel en volume, tandis que simultanément la une couche (20) de structure, comme étage de filtre fin, maintient basse la perte de pression d'ensemble à la filtration et augmente la durée de vie de l'élément de filtre.

5. Elément de filtre suivant l'une des revendications précédentes, **caractérisé en ce que** la une couche (20) respective de structure possède une finesse de filtre de 10 um et l'autre couche (22) respective de structure a une finesse de filtre de 5 µm.

6. Elément de filtre suivant l'une des revendications précédentes, **caractérisé en ce que** la répartition du courant en volume partiel à total représente de 1/3 à 2/3 et va jusqu'à un rapport 50 : 50 %.

7. Elément de filtre suivant l'une des revendications précédentes, **caractérisé en ce que** la une couche (20) de structure sert de filtre auxiliaire et l'autre couche (22) de structure forme un filtre principal, de manière à obtenir un type de filtration à courant principal et courant auxiliaire.

8. Elément de filtre suivant l'une des revendications précédentes, **caractérisé en ce que** l'une des coiffes (2) d'extrémité a une soupape (18) de dérivation et/ou l'autre coiffe (4) d'extrémité a un filtre (16) de protection pénétrant dans la cavité (12) de filtre.
